# DEMANDE DE BREVET EUROPEEN

(11) **EP 4 679 669 A1**
(43) Date de publication de la demande: **14.01.2026**
(21) Numéro de dépôt: 25188233.8
(22) Date de dépôt: 08.07.2025
(51) Int. Cl.: H02J 7/00, H02J 7/34, H02J 13/00, H02J 50/00, H04B 5/24, H04B 5/79, H04B 5/72

(54) **APPAREILLAGE ELECTRIQUE DE PROTECTION MUNI D'UN AFFICHAGE ET PROCEDE DE MISE A JOUR DE L'AFFICHAGE ASSOCIE**

(30) Priorité: 09.07.2024 FR 2407499
(71) Demandeur: Hager Next, 67210 Obernai (FR)
(72) Inventeur: GACEUS, Vincent, 67210 OBERNAI (FR); ZEISSLOFF, Thibaut, 67210 BERNARDSWILLER (FR)
(74) Mandataire: Ipsilon

(57) **Abrégé**

L'invention concerne un appareillage électrique (1) de protection comportant un module de communication sans fil (2) configuré pour être alimenté électriquement par une énergie captée à partir de l'intensité du champ électromagnétique (EM) du deuxième émetteur/récepteur (5) et pour établir un lien de communication bidirectionnelle spécifique avec l'unité de communication distante (4), un afficheur (6) de préférence un écran papier électronique configuré pour afficher une information visuelle, un module de contrôle (7) relié électriquement à l'afficheur (6), caractérisé en ce que :
- le module de contrôle (7) est relié électriquement au module de communication sans fil (2),
- le module de contrôle (7) et/ou l'au moins un afficheur (6) sont configurés pour être alimentés directement ou indirectement par une partie de l'énergie captée au moins en l'absence d'alimentation par le réseau électrique ou une source auxiliaire au moins lors d'une commande de la mise à jour et/ou d'une mise à jour de l'affichage de l'au moins une information visuelle affichée par au moins une information visuelle à jour.

## Description

La présente invention concerne le domaine des appareillages électriques de protection munis d'un affichage et le domaine des procédés de mise à jour de l'affichage associés.

L'on connaît déjà des appareillages électriques de protection munis d'un affichage de type écran papier électronique configuré pour afficher au moins une information visuelle.

La publication IN00863MU2013 décrit un système d'affichage pour l'affichage d'informations qui sont relatives au déclenchement d'un disjoncteur. Il comprend un contrôleur couplé à un déclencheur et un disjoncteur. Le contrôleur permet de détecter une condition de défaut sur la base des mesures et des calculs effectués par le déclencheur et peut émettre une commande de déclenchement audit disjoncteur. Le contrôleur de plus peut émettre une commande d'actionnement d'affichage. Le dispositif d'affichage peut être de type E-paper ou écran papier électronique et être couplé au contrôleur et est alimenté par un transformateur de courant pour imprimer électroniquement et afficher des informations relatives au déclenchement du disjoncteur lors de la réception de ladite commande d'actionnement d'affichage dudit contrôleur. Le dispositif d'affichage E-paper ou écran papier électronique permet d'afficher de manière permanente lesdites informations relatives au déclenchement du disjoncteur même après que ladite alimentation électrique dudit transformateur de courant ait été interrompue en raison du déclenchement dudit disjoncteur, facilitant ainsi l'affichage de ces informations à tout moment.

Dans ce document, le dispositif d'affichage E-paper ou écran papier électronique est alimenté par le réseau électrique par l'intermédiaire du transformateur de courant. En l'absence d'alimentation via le transformateur de courant, il n'est pas possible de modifier les informations affichées par le dispositif d'affichage E-paper ou écran papier électronique. En outre, seules des informations relatives au déclenchement du disjoncteur y sont affichées.

La publication US 2015/099464A1 divulgue un relais comportant trois lignes électriques, un module de communication qui peut communiquer avec un dispositif externe. Le relais comprend également un port de sortie sous la forme d'un affichage par exemple une diode électroluminescente ou un écran à cristaux liquides ou un e-paper et comprend en outre un module de traitement. L'affichage peut en outre être configuré pour indiquer les informations associées au signal de communication en champ proche. L'affichage peut être placé sur le panneau/la face avant du relais. Les différentes fonctions (ou commandes) et les réglages de l'heure peuvent donc être présentés à l'aide de l'affichage sur la face avant. Le dispositif externe peut être configuré pour fournir de l'énergie au relais lorsqu'il n'est pas alimenté. Toutefois, cette solution ne montre pas d'unité de stockage de l'énergie électrique captée et comment optimiser la gestion de l'énergie électrique captée pour alimenter le module de contrôle et/ou l'afficheur.

La publication US 2015/288421A1 divulgue un couvercle pour un téléphone portable qui peut être attaché au boîtier du téléphone portable. Le couvercle comprend un afficheur et un circuit. Le circuit peut capter l'énergie en provenance d'un autre circuit du téléphone portable afin d'alimenter l'afficheur et fournir des données à l'afficheur afin qu'il affiche ces données. L'afficheur peut être de type e-ink. Le couvercle peut comprendre également une batterie rechargeable. L'alimentation rechargeable peut être chargée par l'énergie captée. Le circuit de charge peut décharger l'alimentation rechargeable pour alimenter le dispositif d'affichage du couvercle afin d'alimenter temporairement le dispositif d'affichage pour qu'il affiche les données reçues de l'équipement de l'utilisateur.

En revanche dans cette publication, il n'est pas question d'un appareillage électrique de protection mais d'un couvercle pour un téléphone portable. En outre, cette solution ne montre pas que le module de contrôle peut être mis dans un mode veille dans lequel l'énergie électrique stockée dans l'unité de stockage de l'énergie électrique n'est plus dirigée vers le module de contrôle. Enfin, cette publication ne mentionne pas comment limiter la consommation du module de contrôle pour optimiser la gestion de l'énergie électrique de l'unité de stockage surtout si l'énergie captée est faible.

La présente invention a pour but de pallier au moins l'un de ces inconvénients et vise à fournir une solution permettant de mettre à jour l'affichage de l'appareillage électrique de protection en absence ou en présence d'alimentation par le réseau électrique ou une source auxiliaire et permettant d'optimiser la gestion de l'énergie électrique provenant de l'unité de stockage de l'énergie électrique notamment si l'énergie récupérée est faible.

A cet effet, l'invention concerne un appareillage électrique de protection selon la revendication 1.

L'invention concerne également un procédé de mise à jour de l'affichage selon la revendication 6.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente une vue schématique d'un appareillage électrique de protection et d'une unité de communication distante selon l'invention,
[Fig. 2] la figure 2 représente une vue schématique de certaines étapes du procédé de mise à jour de l'affichage selon l'invention, et
[Fig. 3] la figure 3 représente une courbe du signal de mise à jour active de l'afficheur en fonction du temps et une courbe de la tension de l'unité de stockage de l'énergie électrique en fonction du temps dans un exemple de réalisation.

Un appareillage électrique 1 de protection comporte au moins :
- une ligne électrique agencée pour être raccordée au réseau électrique ou une source auxiliaire,
- un module de communication sans fil 2 comportant au moins un premier émetteur/récepteur 3 configuré pour recevoir un champ électromagnétique EM en champ proche provenant d'une unité de communication distante 4 comportant au moins un deuxième émetteur/ récepteur 5 configuré pour émettre le champ électromagnétique EM laquelle étant distincte et à distance de l'appareillage électrique 1,
   le module de communication sans fil 2 étant au moins configuré pour être alimenté électriquement par une énergie captée à partir de l'intensité du champ électromagnétique EM du deuxième émetteur/récepteur 5 et pour établir au moins un lien de communication bidirectionnelle spécifique avec l'unité de communication distante 4,
- au moins un afficheur 6 de préférence un écran papier électronique ou un écran LCD avec la technologie ZBD configuré pour afficher au moins une information visuelle,
- un module de contrôle 7 relié électriquement à l'au moins un afficheur 6,
- un boîtier 8 formant une enveloppe externe de l'appareillage électrique 1 et étant traversé par l'au moins une ligne électrique et contenant à l'intérieur au moins le module de communication sans fil 2, le module de contrôle 7 et l'au moins un afficheur 6 monté dans le boîtier 8 de sorte que l'au moins une information visuelle affichée soit visible de l'extérieur du boîtier 8 et de préférence d'une face avant du boîtier 8.

Conformément à l'invention, l'appareillage électrique 1 est caractérisé en ce que :
le module de contrôle 7 est relié électriquement au module de communication sans fil 2,
le module de contrôle 7 et/ou l'au moins un afficheur 6 sont configurés pour être alimentés directement ou indirectement par une partie de l'énergie captée au moins en l'absence d'alimentation par le réseau électrique ou une source auxiliaire au moins lors d'une commande de la mise à jour et/ou d'une mise à jour de l'affichage de l'au moins une information visuelle affichée par au moins une information visuelle à jour.

Il en résulte que grâce à l'invention, il est possible de commander et de mettre à jour l'affichage de l'appareillage électrique 1 de protection en absence ou en présence d'alimentation par le réseau électrique ou une source auxiliaire à partir d'une partie de l'énergie captée à partir de l'intensité du champ électromagnétique EM du deuxième émetteur/récepteur 5 de l'unité de communication distante 4.

Le module de contrôle 7 est configuré pour commander la mise à jour de l'affichage de l'au moins une information visuelle affichée par l'au moins une information visuelle à jour en envoyant des données de mise à jour représentatives de l'information visuelle mise à jour puis un signal de pilotage SP à l'au moins un afficheur 6 si préalablement un lien de communication bidirectionnelle spécifique est établi et si au moins un signal de commande dédié de mise à jour SC1 adressé spécifiquement au module de communication sans fil 2 en provenance de l'unité de communication distante 4 est réceptionné par le module de communication sans fil 2 puis transmis au module de contrôle 7 et pour être alimenté directement ou indirectement par une partie de l'énergie captée et l'au moins un afficheur 6 est configuré pour mettre à jour l'affichage de l'au moins une information visuelle affichée par l'au moins une information visuelle à jour après réception des données de mise à jour puis du signal de pilotage SP et pour être alimenté directement ou indirectement par une partie de l'énergie captée.

Avantageusement, le module de contrôle 7 a pour fonction d'envoyer des informations provenant de l'unité de communication distante 4 vers l'afficheur 6 et de commander la mise à jour de l'afficheur 6 en étant alimenté à partir de l'énergie captée soit directement, c'est-à-dire que l'alimentation se fait sans l'intermédiaire d'un stockage d'énergie électrique, soit indirectement par l'intermédiaire d'un stockage d'énergie électrique. L'afficheur 6 a pour fonction de recevoir les informations provenant du module de contrôle 7 et de les afficher après en avoir reçu la commande du module de contrôle 7 en étant alimenté à partir de l'énergie captée également soit directement, soit indirectement.

L'appareillage électrique 1 comprend une unité de stockage de l'énergie électrique 10 configurée pour stocker une partie de l'énergie captée au moins en l'absence d'alimentation par le réseau électrique ou une source auxiliaire et pour alimenter indirectement le module de contrôle 7 et/ou l'au moins un afficheur 6.

Avantageusement, une partie de l'énergie captée qui n'est pas utilisée pour la communication entre l'appareillage électrique 1 et l'unité de communication distante 4 peut être stockée lorsqu'elle est disponible et peut être restituée ultérieurement. Dans ce cas, le module de contrôle 7 et/ou l'au moins un afficheur 6 peuvent être alimentés indirectement par la partie stockée de l'énergie captée.

L'unité de stockage de l'énergie électrique 10 est configurée pour stocker la partie de l'énergie captée au moins pendant la réception du signal de commande dédié de mise à jour SC1 adressé spécifiquement au module de communication sans fil 2 de préférence au moins jusqu'à un premier seuil de charge permettant l'alimentation du module de contrôle 7 et de préférence jusqu'à un deuxième seuil de charge permettant l'alimentation de l'au moins un afficheur 6 et est configurée pour alimenter le module de contrôle 7 au moins pendant la réception du signal de commande dédié de mise à jour SC1, l'envoi des données de mise à jour et l'envoi du signal de pilotage SP.

Avantageusement, l'unité de stockage de l'énergie électrique 10 est prévue pour stocker de l'énergie jusqu'au premier seuil de charge permettant l'alimentation du module de contrôle 7 et jusqu'au deuxième seuil de charge permettant l'alimentation de l'au moins un afficheur 6. Dans certaines situations la partie de l'énergie captée peut ne pas être suffisante pour alimenter en même temps le module de contrôle 7 et/ou l'au moins un afficheur 6, le stockage par l'unité de stockage de l'énergie électrique 10 permet avantageusement d'emmagasiner l'énergie électrique suffisante au fonctionnement du module de contrôle 7 (premier seuil de charge) et/ou de l'au moins un afficheur 6 (deuxième seuil de charge). La définition des seuils de charge permet de conditionner le fonctionnement du module de contrôle 7 et/ou l'au moins un afficheur 6 à l'atteinte de ces seuils de charge respectifs. Notamment si au moins le premier seuil de charge est atteint, le module de contrôle 7 pourra recevoir le signal de commande dédié de mise à jour SC1, envoyer des données de mise à jour et envoyer le signal de pilotage SP. En outre, si au moins le premier seuil de charge est atteint l'afficheur 6 pourra recevoir les données de mise à jour, mais ne pourra pas faire la mise à jour. En effet, le seuil en tension mais surtout l'énergie stockée dans l'unité de stockage de l'énergie électrique 10 peuvent ne pas être suffisants pour permettre la mise à jour.

Le module de contrôle 7 est configuré pour être dans un mode veille ou basse consommation consécutivement à l'envoi des données, de sorte à limiter la consommation d'électricité provenant de l'unité de stockage de l'énergie électrique 10.

Avantageusement, dans ce mode l'énergie électrique stockée dans l'unité de stockage de l'énergie électrique 10 n'est plus dirigée vers le module de contrôle 7. Cette configuration permet d'atteindre plus rapidement le deuxième seuil de charge en limitant la consommation électrique du module de contrôle 7 après l'envoi des données à l'afficheur 6. La gestion de l'énergie électrique provenant de l'unité de stockage de l'énergie électrique 10 est ainsi optimisée. Cette configuration est optionnelle, car elle peut-être non indispensable si l'énergie récupérée est suffisante notamment si la puissance d'émission est forte et/ou si un excellent couplage émetteur/récepteur est établi.

Le module de contrôle 7 est configuré pour passer du mode veille ou basse consommation vers un mode réveillé après que le deuxième seuil de charge de l'unité de stockage de l'énergie électrique 10 soit atteint et préalablement à la transmission du signal de pilotage SP et est configuré pour être alimenté par l'unité de stockage de l'énergie électrique 10.

Avantageusement, dans ce mode l'énergie électrique stockée dans l'unité de stockage de l'énergie électrique 10 est à nouveau dirigée vers le module de contrôle 7. Le module de contrôle 7 fonctionne pour envoyer le signal de pilotage SP à condition que l'énergie stockée disponible dans l'unité de stockage de l'énergie électrique 10 suffise à alimenter l'afficheur 6. La gestion de l'énergie électrique provenant de l'unité de stockage de l'énergie électrique 10 est ainsi optimisée. Cette configuration est optionnelle, car elle peut-être non indispensable si l'énergie récupérée est suffisante notamment si la puissance d'émission est forte et/ou si un excellent couplage émetteur/récepteur est établi.

Le module de contrôle 7 est configuré pour envoyer le signal de pilotage SP à l'au moins un afficheur 6 après réception du signal de commande dédié de mise à jour SC1, puis après l'envoi des données de mise à jour, puis après que le deuxième seuil de charge de l'unité de stockage de l'énergie électrique 10 soit atteint et est configuré pour être alimenté par l'unité de stockage de l'énergie électrique 10, et l'au moins un afficheur 6 est configuré pour mettre à jour l'affichage de l'au moins une information visuelle affichée par l'au moins une information visuelle à jour après réception des données de mise à jour, puis après que le deuxième seuil de charge de l'unité de stockage de l'énergie électrique 10 soit atteint, puis après réception du signal de pilotage SP et est configuré pour être alimenté par l'unité de stockage de l'énergie électrique 10.

Avantageusement, l'atteinte du deuxième seuil de charge conditionne l'envoi du signal de pilotage SP par le module de contrôle 7, puis sa réception par l'afficheur 6 et enfin la mise à jour de l'affichage de l'au moins une information visuelle affichée par l'au moins une information visuelle à jour. La gestion de l'énergie électrique provenant de l'unité de stockage de l'énergie électrique 10 est ainsi optimisée.

De préférence, le module de contrôle 7 est configuré pour transmettre un signal d'acquittement SA à l'unité de communication distante 4 via le module de communication sans fil 2 consécutivement à la mise à jour de l'au moins une information visuelle affichée par l'au moins une information visuelle à jour et pour être alimenté directement par une partie de l'énergie captée.

Avantageusement, cette disposition permet de valider que la mise à jour de l'afficheur 6 ait été correctement effectuée par le module de contrôle 7.

De préférence, l'unité de stockage de l'énergie électrique 10 comprend au moins une capacité.

De préférence, l'appareillage électrique 1 consiste en un appareillage électrique 1 de protection et l'au moins un afficheur 6 est configuré pour afficher au moins une information visuelle représentative d'au moins un réglage de protection de préférence un calibre de protection de l'appareillage électrique 1 de protection ou une information nécessaire au fonctionnement de l'appareillage électrique 1 de manière permanente.

Avantageusement, cette configuration permet d'afficher en permanence au moins un réglage de protection de préférence un calibre de protection de l'appareillage électrique 1 ou une information nécessaire au fonctionnement de l'appareillage électrique 1 quel que soit l'état d'alimentation de l'appareillage électrique 1 de protection. L'invention permet ainsi avantageusement de mettre à jour le calibre de protection de l'appareillage électrique 1 à partir d'une partie de l'énergie captée provenant de l'unité de communication distante 4 puis de conserver l'affichage de ces informations à tout moment et même lorsque l'afficheur 6 n'est plus alimenté. Aucune pile ou batterie ou supercondensateur n'est nécessaire.

De préférence, l'appareillage électrique 1 peut être un disjoncteur.

L'appareillage électrique 1 peut aussi être un appareillage électrique de protection à coupure électronique.

L'appareillage de protection à coupure électronique peut être modulaire et être par exemple un disjoncteur modulaire statique du type SCCB (Semi Conductor Circuit Breaker) ou un disjoncteur différentiel modulaire statique SC-RCBO (Semi Conductor Residual current Circuit Breaker with Overload). Ces exemples ne sont pas limitatifs.

De préférence, l'appareillage électrique 1 est agencé pour pouvoir être installé dans un tableau de distribution électrique (non représenté).

De préférence, ladite au moins une ligne électrique comprend au moins un conducteur électrique qui peut être alimenté par exemple par le réseau électrique.

De préférence, le module de communication sans fil 2 permet le cas échéant d'émettre et de recevoir des ondes électromagnétiques en champ proche via la technologie en champ proche couramment appelée NFC. Le module de communication sans fil 2 peut être alimenté soit indirectement et sans contact par l'unité de commande distante 4 par communication en champ proche ou directement à partir du réseau électrique ou d'une source auxiliaire si celle-ci est alimentée en électricité. En effet, le module de communication sans fil 2 peut être alimenté électriquement par l'énergie captée à partir de l'intensité du champ électromagnétique EM du deuxième émetteur 5. L'énergie captée est une énergie électromagnétique. Une partie de l'énergie captée peut être utilisée pour alimenter électriquement le module de contrôle 7 et/ou l'au moins un afficheur 6. Cette partie de l'énergie captée peut correspondre à une portion de l'énergie captée qui n'a pas été consommée par le module de communication sans fil 2. Le module de communication sans fil 2 comprend le premier émetteur/récepteur 3. Le module de communication sans fil 2 peut établir au moins un lien de communication unidirectionnelle ou bidirectionnelle avec l'unité de commande distante 4. Le module de communication sans fil 2 est de préférence relié électriquement au module de contrôle 7 et à l'unité de stockage de l'énergie électrique 10.

De préférence, le module de communication sans fil 2 est conforme à la norme IEC15693.

De préférence, le premier émetteur/récepteur 3 comprend au moins une antenne.

L'unité de commande distante 4 est de préférence un smartphone ou une tablette ou un ordinateur portable. L'unité de commande distante 4 comprend de préférence un afficheur dédié par exemple un écran.

Le deuxième émetteur/récepteur 5 permet d'émettre et de recevoir des ondes électromagnétiques en champ proche via la technologie en champ proche couramment appelée NFC. L'unité de commande distante 4 et le module de communication sans fil 2 peuvent échanger des signaux électromagnétiques à distance. Le deuxième émetteur/récepteur 5 peut alimenter le module de communication sans fil 2. L'unité de communication distante 4 comprend soit un un deuxième émetteur/récepteur 5. L'unité de communication distante 4 pourra établir au moins un lien de communication unidirectionnelle ou bidirectionnelle avec le module de communication sans fil 2.

L'unité de commande distante 4 comprend de préférence un microcontrôleur (non représenté).

L'afficheur 6 a pour fonction d'afficher au moins une information visuelle. L'afficheur 6 peut afficher ces informations même après la coupure du champ électromagnétique EM et donc de l'éloignement de l'unité de communication distante 4. L'information visuelle peut être un réglage de protection de préférence un calibre de protection. L'information visuelle peut comprendre un ou des caractères typographiques et/ou un ou des chiffres et/ou un QR-code et/ou un code barre et/ou un symbole et/ou un logo. L'afficheur 6 peut être alimenté par l'au moins une partie de l'énergie captée directement éventuellement au travers du module de contrôle 7, soit indirectement par celle-ci à partir de l'unité de stockage de l'énergie électrique 10. L'afficheur 6 est de préférence un écran papier électronique ou un écran LCD avec la technologie ZBD ne comprenant pas de batterie ou de pile. Le terme "ZBD" fait généralement référence à " zenithal bistable display" dans le contexte des écrans à cristaux liquides LCD. Un écran à cristaux liquides (LCD) ZBD présente un mode d'affichage bistable qui peut conserver une image écrite électriquement pendant de nombreuses années sans alimentation appliquée. L'afficheur 6 est de préférence relié électriquement au module de contrôle 7 et à l'unité de stockage de l'énergie électrique 10.

L'unité de stockage de l'énergie électrique 10 peut comprendre au moins une capacité par exemple des capacités céramiques à faible courant de fuite. L'unité de stockage de l'énergie électrique 10 est configurée pour stocker de l'énergie électrique qui peut être au moins une partie de l'énergie captée qui n'a pas été consommée. L'avantage de l'unité de stockage de l'énergie électrique 10 est de permettre une accumulation d'énergie qui peut être restituée ultérieurement en fonction des besoins. L'unité de stockage de l'énergie électrique 10 est de préférence reliée électriquement au module de communication 2, au module de contrôle 7 et à l'au moins un afficheur 6.

Le boitier 8 est construit de sorte à ce que les informations indiquées par l'afficheur 6 soient visibles par la face avant. Par exemple, le boîtier 8 comprend de préférence une ouverture sur la face avant. L'afficheur 6 débouche de préférence au niveau de l'ouverture pour être visible.

Le module de contrôle 7 est de préférence un microcontrôleur (non représenté). Le module de contrôle 7 est de préférence relié électriquement au module de communication sans fil 2, à l'au moins un afficheur 6 et à l'unité de stockage de l'énergie électrique 10. Le module de contrôle 7 peut être alimenté par l'au moins une partie de l'énergie captée directement, soit indirectement par celle-ci à partir de l'unité de stockage de l'énergie électrique 10.

L'appareillage électrique 1 comprend de préférence une mémoire non-volatile reliée électriquement au module de contrôle 7. De préférence, la mémoire non-volatile permet la sauvegarde des données de mise à jour.

Le premier seuil de charge correspond au seuil de tension minimum de fonctionnement du module de contrôle 7 désigné par la référence VA qui peut être compris entre 1,8 et 2 Volts.

Le deuxième seuil de charge correspond au seuil de tension minimum de fonctionnement de l'afficheur 6 pour permettre la mise à jour désigné par VB qui peut être compris entre 3,2 et 3,4 Volts.

Le signal de commande dédié de mise à jour SC1 comprend de préférence des données de mise à jour pour l'afficheur 6 et optionnellement des données d'authentification pour des questions de sécurité. Les données de mise à jour sont de préférence représentatives d'au moins un réglage de protection de préférence un calibre nominal de protection de l'appareillage électrique 1. Le module de contrôle 7 peut être configuré pour vérifier que ces données de mise à jour représentatives d'au moins un réglage de protection de préférence un calibre de protection de l'appareillage électrique 1 sont cohérentes en vérifiant par exemple que la plage de calibrage est dans la plage possible. Le sur-paramétrage est ainsi évité.

Le troisième seuil de charge correspond au seuil de tension minimum en dessous duquel l'afficheur 6 ne fonctionne plus désigné par la référence V0 qui peut être compris entre 2 et 2,2 Volts et qui peut valoir le deuxième seuil de charge.

Le signal de retour d'indication de fin de cycle SR correspond de préférence au passage d'un état d'occupation S1 vers un état non-occupé S0, comme décrit ci-après.

L'invention concerne également un procédé de mise à jour de l'affichage de ladite information visuelle affichée par une information visuelle à jour d'au moins un afficheur 6 dans un appareillage électrique 1 de protection configuré pour communiquer avec l'unité de communication distante 4 comportant l'au moins un deuxième émetteur/ récepteur 5 configuré pour émettre le champ électromagnétique EM laquelle étant distincte et à distance de l'appareillage électrique 1, caractérisé en ce que l'appareillage électrique 1 est selon l'invention et ce que le procédé comprend :
- une étape d'émission du champ électromagnétique 100, lors de laquelle le deuxième émetteur/ récepteur 5 de l'unité de communication distante 4 émet le champ électromagnétique EM en champ proche et l'unité de communication distante 4 est approchée de l'appareillage électrique 1 préférentiellement à une distance inférieure à 5 centimètres,
- une étape de réception du champ électromagnétique 101, lors de laquelle le premier émetteur/ récepteur 3 du module de communication sans fil 2 de l'au moins un appareillage électrique 1 reçoit le champ électromagnétique EM en champ proche de sorte à établir le lien de communication bidirectionnelle spécifique par le champ électromagnétique EM et est alimenté électriquement par l'énergie captée à partir de l'intensité du champ électromagnétique du deuxième émetteur/récepteur 5,
- une étape de commande par le module de contrôle 104, lors de laquelle le module de contrôle 7 commande la mise à jour de l'au moins un afficheur 6 et est alimenté directement ou indirectement par une partie de l'énergie captée,
- une étape de mise à jour de l'au moins un afficheur 106, lors de laquelle l'au moins un afficheur 6 met à jour l'affichage de ladite information visuelle affichée par une information visuelle à jour et est alimenté directement ou indirectement par une partie de l'énergie captée.

Il en résulte que grâce à l'invention, il est possible de mettre en œuvre l'étape de commande par le module de contrôle 104 et l'étape de mise à jour de l'au moins un afficheur 106 en absence ou en présence d'alimentation par le réseau électrique ou une source auxiliaire. L'alimentation du module de contrôle 7 et de l'au moins un afficheur 6 se faisant lors de ces étapes à partir d'une partie de l'énergie captée à partir de l'intensité du champ électromagnétique EM du deuxième émetteur/récepteur 5 de l'unité de communication distante 4.

Le procédé de mise à jour de l'affichage après l'étape de réception du champ électromagnétique 100, comporte au moins :
- une étape d'émission d'une commande ciblée 102, lors de laquelle le deuxième émetteur/récepteur 5 de l'unité de communication distante 4 émet le champ électromagnétique EM pour transmettre le signal de commande dédié de mise à jour SC1, puis
- une étape de réception de la commande ciblée 103, lors de laquelle le premier émetteur/récepteur 3 du module de communication sans fil 2 reçoit le signal de commande dédié de mise à jour SC1 ; puis

lors de l'étape de commande par le module de contrôle 104, le module de contrôle 7 reçoit le signal de commande dédié de mise à jour SC1, puis envoie les données de mise à jour, puis envoie le signal de pilotage SP à l'au moins un afficheur 6 et est alimenté directement ou indirectement par une partie de l'énergie captée,
lors de l'étape de mise à jour de l'au moins un afficheur 106, l'au moins un afficheur 6 reçoit les données de mise à jour puis le signal de pilotage SP puis met à jour l'affichage de ladite information visuelle affichée par une information visuelle à jour et est alimenté directement ou indirectement par une partie de l'énergie captée.

Le procédé de mise à jour de l'affichage comprend consécutivement à l'étape de réception du champ électromagnétique 101 au moins :
- une étape de stockage de l'énergie captée, lors de laquelle l'unité de stockage de l'énergie électrique 10 stocke une partie de l'énergie captée au moins en l'absence d'alimentation par le réseau électrique ou une source auxiliaire pour alimenter indirectement le module de contrôle 7 et/ou l'au moins un afficheur 6.

Avantageusement, lors de l'étape de stockage de l'énergie captée, une partie de l'énergie captée qui n'est pas utilisée pour la communication entre l'appareillage électrique 1 et l'unité de communication distante 4 peut être stockée lorsqu'elle est disponible et peut être restituée ultérieurement. Dans ce cas, le module de contrôle 7 et/ou l'au moins un afficheur 6 peuvent être alimentés indirectement par la partie stockée de l'énergie captée pendant certaines étapes du procédé et notamment lors de l'étape de commande par le module de contrôle 104 et lors de l'étape de mise à jour de l'au moins un afficheur 106.

Lors de l'étape de stockage de l'énergie captée et lors de l'étape de commande par le module de contrôle 104, l'unité de stockage de l'énergie électrique 10 stocke la partie de l'énergie captée au moins pendant la réception du signal de commande dédié de mise à jour SC1 adressé spécifiquement au module de communication sans fil 2 de préférence au moins jusqu'au premier seuil de charge permettant l'alimentation du module de contrôle 7 et de préférence jusqu'au deuxième seuil de charge permettant l'alimentation de l'au moins un afficheur 6, et le module de contrôle 7 est alimenté par l'unité de stockage de l'énergie électrique 10 au moins pendant la réception du signal de commande dédié de mise à jour SC1 , l'envoi des données de mise à jour puis l'envoi du signal de pilotage SP.

Lors de l'étape de stockage de l'énergie captée, l'unité de stockage de l'énergie électrique 10 stocke de l'énergie électrique entre le premier seuil de charge et le deuxième de charge pour que lors de l'étape de commande par le module de contrôle 104, le module de contrôle 7 puisse être alimenté par l'unité de stockage de l'énergie électrique 10 pour pouvoir opérer la réception du signal de commande dédié de mise à jour SC1, l'envoi des données de mise à jour puis l'envoi du signal de pilotage SP.

Le procédé de mise à jour de l'affichage comprend en outre :
- une étape de mise en veille 105 se déroulant pendant l'étape de commande par le module de contrôle 104, lors de laquelle le module de contrôle 7 est dans un mode veille ou basse consommation consécutivement à l'envoi des données de mise à jour, de sorte à limiter la consommation d'électricité provenant de l'unité de stockage de l'énergie électrique 10.

Avantageusement, l'étape de mise en veille 105 permet que l'énergie électrique stockée dans l'unité de stockage de l'énergie électrique 10 ne soit plus consommée par le module de contrôle 7 pour atteindre plus rapidement le deuxième seuil de charge en limitant la consommation électrique du module de contrôle 7 après l'envoi des données de mise à jour à l'afficheur 6. La gestion de l'énergie électrique provenant de l'unité de stockage de l'énergie électrique 10 est ainsi optimisée.

Le procédé de mise à jour de l'affichage comprend une étape de réveil 105' se déroulant pendant l'étape de commande par le module de contrôle 104 après l'étape de mise en veille 105, le module de contrôle 7 passe du mode veille ou basse consommation vers le mode réveillé après que le deuxième seuil de charge de l'unité de stockage de l'énergie électrique 10 soit atteint et préalablement à la transmission du signal de pilotage SP et est alimenté par l'unité de stockage de l'énergie électrique 10.

Avantageusement, l'étape de réveil 105' permet que l'énergie électrique stockée dans l'unité de stockage de l'énergie électrique 10 soit à nouveau consommée par le module de contrôle 7 qui sera alors en mesure d'envoyer le signal de pilotage SP à condition que l'énergie stockée disponible dans l'unité de stockage de l'énergie électrique 10 suffise à alimenter l'afficheur 6. La gestion de l'énergie électrique provenant de l'unité de stockage de l'énergie électrique 10 est ainsi optimisée.

De préférence, lors de l'étape de commande par le module de contrôle 104, le module de contrôle 7 reçoit le signal de commande dédié de mise à jour SC1, puis envoie les données de mise à jour, puis le deuxième seuil de charge de l'unité de stockage de l'énergie électrique 10 est atteint, puis le module de contrôle 7 envoie le signal de pilotage SP à l'au moins un afficheur 6 et le module de contrôle 7 est alimenté par l'unité de stockage de l'énergie électrique 10, et lors de l'étape de mise à jour de l'au moins un afficheur 106, l'au moins un afficheur 6 reçoit les données de mise à jour, puis le deuxième seuil de charge de l'unité de stockage de l'énergie électrique 10 est atteint, puis l'au moins un afficheur 6 reçoit le signal de pilotage SP, puis l'au moins un afficheur 6 met à jour l'affichage de l'au moins une information visuelle affichée par l'au moins une information visuelle à jour et l'au moins un afficheur 6 est alimenté par l'unité de stockage de l'énergie électrique 10.

Toutefois, il peut être est nécessaire de continuer de capter l'énergie pendant ces étapes. L'énergie stockée peut ne pas être suffisante à elle seule, il faut constamment utiliser l'énergie récupérée.

De préférence, le procédé de mise à jour de l'affichage comprend en outre consécutivement à l'étape de mise à jour de l'au moins un afficheur 106 :
- une étape d'acquittement 107, lors de laquelle le module de contrôle 7 transmet le signal d'acquittement SA à l'unité de communication distante 4 via le module de communication sans fil 2 et est alimenté directement par une partie de l'énergie captée.

Avantageusement, l'étape d'acquittement 107 permet de vérifier que la mise à jour de l'afficheur 6 a été correctement effectuée.

De préférence, l'étape d'acquittement 107 démarre si l'au moins un afficheur 6 envoie préalablement un signal de retour d'indication de fin de cycle SR au module de contrôle 7, lequel transmet ensuite le signal d'acquittement SA et sauvegarde les données de mise à jour dans une mémoire interne non-volatile (non représentée) de l'appareillage électrique 1, la mémoire interne non-volatile étant reliée électriquement au module de contrôle 7.

De préférence, l'étape de commande par le module de contrôle 104 démarre avant l'étape de mise à jour de l'au moins un afficheur 106 et est ensuite exécutée en parallèle de l'étape de mise à jour de l'au moins un afficheur 106.

L'étape de mise à jour de l'au moins un afficheur 106 s'achève en dernier après que l'au moins un afficheur 6 ait mis à jour l'affichage de l'au moins une information visuelle affichée par l'au moins une information visuelle à jour.

De préférence, l'étape de commande par le module de contrôle 104 s'achève après que le module de contrôle 7 ait envoyé le signal de pilotage SP.

De préférence, le délai de mise à jour T démarre après réception du signal de pilotage SP par l'au moins l'au moins un afficheur 6 et s'achève après que l'au moins un afficheur 6 ait mis à jour l'affichage de l'au moins une information visuelle affichée par l'au moins une information visuelle à jour. L'au moins un afficheur 6 peut ensuite envoyer le signal de retour d'indication de fin de cycle SR.

De préférence et de manière optionnelle, le procédé de mise à jour de l'affichage comprend en outre :
- une étape de mise en veille additionnelle consécutivement à l'achèvement de l'étape de commande par le module de contrôle 104, lors de laquelle le module de contrôle 7 est dans un mode veille ou basse consommation consécutivement à l'envoi du signal de pilotage SP, de sorte à limiter la consommation d'électricité provenant de l'unité de stockage de l'énergie électrique 10.

De préférence et de manière optionnelle, le procédé de mise à jour de l'affichage comprend une étape de réveil additionnelle après l'étape de mise en veille additionnelle, lors de laquelle le module de contrôle 7 passe du mode veille ou basse consommation vers le mode réveillé après que l'au moins un afficheur 6 ait envoyé le signal de retour d'indication de fin de cycle SR au module de contrôle 7 est alimenté par l'unité de stockage de l'énergie électrique 10.

De préférence, le procédé de mise à jour de l'affichage comprend en outre :
- une étape de non-acquittement, pendant que l'au moins un afficheur 6 met à jour l'affichage et si la tension d'alimentation de l'au moins un afficheur 6 passe sous un troisième seuil de charge ou postérieurement à la mise à jour de l'affichage de l'au moins un afficheur 6 si le délai de mise à jour T dépasse un délai seuil tmax de préférence supérieur à 3 secondes, lors de laquelle le module de contrôle 7 envoie un signal de non-acquittement à l'unité de communication distante 4 via le module de communication sans fil 2 et est alimenté directement par une partie de l'énergie captée et de préférence le module de contrôle 7 ne sauvegarde pas les données de mise à jour dans la mémoire interne non-volatile de l'appareillage électrique 1.

Dans ce cas consécutivement à l'étape de non-acquittement, de préférence l'unité de communication distante 4 invite l'utilisateur à réitérer les étapes du procédé.

De préférence, les étapes du procédé selon l'invention sont effectuées en l'absence d'alimentation de l'appareillage électrique 1 par le réseau électrique ou une source auxiliaire.

Dans ce cas, de préférence lors de l'établissement de l'alimentation de l'appareillage électrique 1 par le réseau électrique ou une source auxiliaire et après l'étape d'acquittement 107, l'au moins un afficheur 6 est mis à jour à partir des données de mise à jour mémorisées dans la mémoire interne non-volatile de l'appareillage électrique 1.

Cette disposition permet d'améliorer la fiabilité et la fidélité de l'affichage.

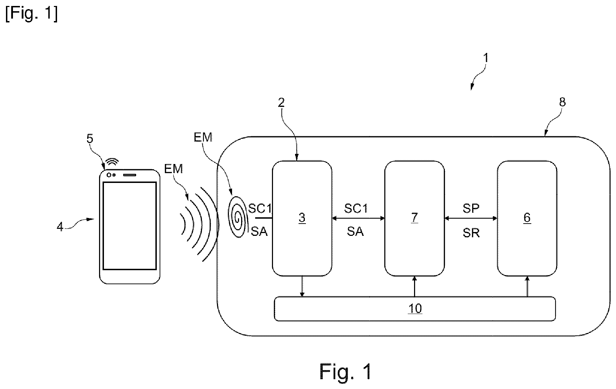

La figure 1 illustre un exemple d'un appareillage électrique de protection 1 et d'une unité de communication distante 4 selon l'invention. L'appareillage électrique 1 de la figure 1 comprend au moins une ligne électrique qui n'est pas illustrée. En outre, l'appareillage électrique 1 comprend le module de communication sans-fil 2, le module de contrôle 7, l'afficheur 6 et l'unité de stockage de l'énergie électrique 10. Le module de communication sans fil 2 comporte le premier émetteur/récepteur 3 configuré pour recevoir/émettre le champ électromagnétique EM en champ proche. Le module de communication sans fil 2 est agencé pour être alimenté électriquement par l'énergie captée à partir de l'intensité du champ électromagnétique EM en provenance de l'unité de communication distante 4. Le module de communication sans fil 2 est relié électriquement au module de contrôle 7 et à l'unité de stockage de l'énergie électrique 10. Le module de contrôle 7 est relié électriquement au module de communication sans fil 2, à l'au moins un afficheur 6 et à l'unité de stockage de l'énergie électrique 10. L'afficheur 6 est relié électriquement au module de contrôle 7 et à l'unité de stockage de l'énergie électrique 10. Le module de communication sans fil 2 et le module de contrôle 7 sont configurés pour échanger des signaux électriques. L'afficheur 6 et le module de contrôle 7 sont configurés pour échanger des signaux électriques. L'unité de stockage de l'énergie électrique 10 est reliée électriquement au module de communication 2, au module de contrôle 7 et à l'afficheur 6. Le boîtier 8 de l'appareillage électrique 1 contient le module de communication sans-fil 2, le module de contrôle 7, l'afficheur 6 et l'unité de stockage de l'énergie électrique 10. L'unité de communication distante 4 est un smartphone qui comprend le deuxième émetteur/récepteur 5. L'unité de communication distante 4 et le module de communication sans fil 2 sont configurés pour échanger des signaux de communication sans fil. Dans cet exemple, l'unité de communication distante 4 est configurée pour transmettre le signal de commande dédié de mise à jour SC1 au module de communication sans fil 2 qui le transmet au module de contrôle 7. Le module de contrôle 7 est configuré pour transmettre le signal de pilotage SP à l'afficheur 6 et l'afficheur 6 peut transmettre le signal de retour d'indication de fin de cycle SR au module de contrôle 7. Le module de contrôle 7 est configuré pour transmettre le signal d'acquittement SA au module de communication sans fil 2 qui peut le transmettre à son tour à l'unité de communication distante 4.

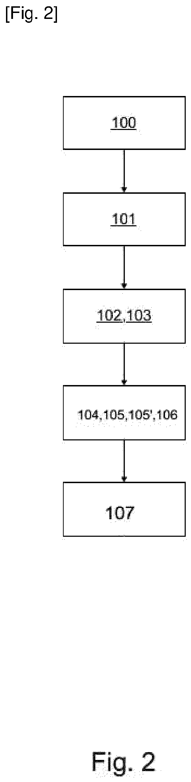

La figure 2 illustre une vue schématique de l'enchainement de certaines étapes du procédé de mise à jour de l'affichage selon l'invention selon un exemple non limitatif. Dans cet exemple, le procédé comprend l'étape d'émission du champ électromagnétique 100, puis l'étape de réception du champ électromagnétique 101, puis l'étape d'émission d'une commande ciblée 102, puis l'étape de réception de la commande ciblée 103, puis l'étape de commande par le module de contrôle 104 incluant l'étape de mise en veille 105 et incluant l'étape de réveil 105', et l'étape de mise à jour de l'au moins un afficheur 106, puis l'étape d'acquittement 107.

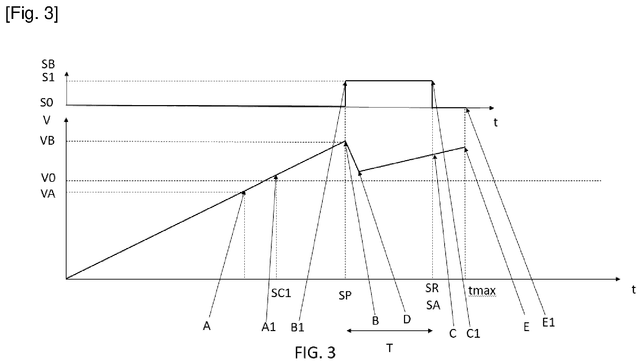

La figure 3 illustre la courbe de mise à jour active SB de l'afficheur 6 en fonction du temps qui est une courbe en créneau et la courbe de la tension V de l'unité de stockage de l'énergie électrique 10 en fonction du temps dans un exemple de réalisation du procédé selon l'invention qui n'est pas limitatif. Le point A correspond à l'atteinte du premier seuil de charge correspondant au seuil de tension minimum de fonctionnement du module de contrôle 7 désigné par la référence VA. Avant le point A, l'étape d'émission du champ électromagnétique 100, puis l'étape de réception du champ électromagnétique 101, puis l'étape d'émission d'une commande ciblée 102, puis l'étape de réception de la commande ciblée 103 démarrent et sont ensuite opérées. L'étape d'émission du champ électromagnétique 100, puis l'étape de réception du champ électromagnétique 101 se poursuivent de préférence pendant le procédé pour capter l'énergie électrique. Au point A, l'étape de commande par le module de contrôle 104 démarre et est exécutée partiellement, c'est-à-dire que seules certaines opérations sont exécutées de cette étape à ce stade, de préférence après l'atteinte du premier seuil de charge au point A1 le module de contrôle 7 reçoit le signal de commande dédié de mise à jour SC1, puis envoie les données de mise à jour à l'afficheur 6, puis l'étape de mise à jour de l'au moins un afficheur 106 démarre et est exécutée partiellement, c'est-à-dire que seules certaines opérations sont exécutées de cette étape à ce stade, l'au moins un afficheur 6 reçoit les données de mise à jour. Entre le point A et le point B, l'étape de mise en veille 105 est opérée après l'envoi des données de mise à jour. Le point B correspond à l'atteinte du deuxième seuil de charge correspondant au seuil de tension minimum de fonctionnement de l'afficheur 6 pour permettre la mise à jour désignée par VB. Au point B, l'étape de réveil 105' démarre et est opérée, puis le module de contrôle 7 envoie le signal de pilotage SP à l'au moins un afficheur 6 ce qui finalise l'étape de commande par le module de contrôle 104, puis l'au moins un afficheur 6 reçoit le signal de pilotage SP, puis entre le point B et le point C l'au moins un afficheur 6 met à jour l'affichage de l'au moins une information visuelle affichée par l'au moins une information visuelle à jour, ce qui finalise l'étape de mise à jour de l'au moins un afficheur 106. Le délai de mise à jour T entre le point B et le point C est de préférence compris entre 0,5 seconde et 3 secondes et n'excède par le délai seuil tmax dans cet exemple. L'étape de non-acquittement n'est donc pas mise en œuvre. Entre le point B et le point C l'étape de veille additionnelle démarre et est opérée et le module de contrôle 7 repasse dans le mode veille pour optimiser la consommation d'énergie. Pendant le délai de mise à jour T, une chute de la courbe de la tension V est observée et est liée à la consommation de l'afficheur 6 qui est plus importante que l'énergie récupérée, dans cet exemple cette chute ne dépasse pas le troisième seuil correspondant au seuil de tension minimum en dessous duquel l'afficheur 6 ne fonctionne plus désigné par la référence V0. L'étape de non-acquittement n'est donc pas mise en œuvre. En revanche, dans un exemple non illustré et si le seuil de tension minimum en dessous duquel l'afficheur 6 ne fonctionne plus désigné par la référence V0 est atteint, l'étape de non-acquittement est mise en œuvre. Le signal de non-acquittement est envoyé à l'unité de communication distante 4 via le module de communication sans fil 2. Dans l'exemple illustré, cette chute de la tension s'arrête au point D avant le point C qui correspond à une moindre consommation de l'au moins un afficheur 6 en fin de mise à jour. On observe parallèlement sur la courbe du signal de mise à jour active SB de l'afficheur 6 en fonction du temps que celle-ci change d'état d'un état non occupé S0 vers un état d'occupation S1 en un point B1 au même moment que le point B qui correspond à la réception du signal de pilotage SP par l'au moins un afficheur 6, et que cet état d'occupation S1 est conservé pendant le délai de mise à jour T jusqu'à un point C1 où celle-ci change à nouveau d'état vers l'état non-occupé S0 au même moment que le point C qui correspond à la fin de la mise à jour. Aux points C et C1, l'au moins un afficheur 6 envoie le signal de retour d'indication de fin de cycle SR puis le transmet au module de contrôle 7, l'étape de réveil additionnelle puis l'étape d'acquittement 107 sont par conséquent mise en œuvre. Le module de contrôle 7 continu à être alimenté par l'énergie captée et envoie le signal d'acquittement SA et sauvegarde les données de mise à jour dans la mémoire interne non-volatile (non représentée) de l'appareillage électrique 1. Enfin aux points E et E1 qui correspond au délai seuil tmax, la courbe du signal de mise à jour active SB est bien dans l'état non-occupé S0 et l'étape de non-acquittement n'a donc pas été mise en œuvre. En revanche, dans un exemple non illustré et si la courbe du signal de mise à jour active SB ne changeait pas d'état et restait dans l'état d'occupation S1 au-delà des points E et E1 qui correspond au délai seuil tmax, l'étape de non-acquittement est mise en œuvre. Le signal de non-acquittement est envoyé à l'unité de communication distante 4 via le module de communication sans fil 2.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Appareillage électrique (1) de protection comportant au moins :
- une ligne électrique agencée pour être raccordée au réseau électrique ou une source auxiliaire,
- un module de communication sans fil (2) comportant au moins un premier émetteur/récepteur (3) configuré pour recevoir un champ électromagnétique (EM) en champ proche provenant d'une unité de communication distante (4) comportant au moins un deuxième émetteur/ récepteur (5) configuré pour émettre le champ électromagnétique (EM) laquelle étant distincte et à distance de l'appareillage électrique (1),
le module de communication sans fil (2) étant au moins configuré pour être alimenté électriquement par une énergie captée à partir de l'intensité du champ électromagnétique (EM) du deuxième émetteur/récepteur (5) et pour établir au moins un lien de communication bidirectionnelle spécifique avec l'unité de communication distante (4),
- au moins un afficheur (6) de préférence un écran papier électronique ou un écran LCD avec la technologie ZBD configuré pour afficher au moins une information visuelle,
- un module de contrôle (7) relié électriquement à l'au moins un afficheur (6),
- un boîtier (8) formant une enveloppe externe de l'appareillage électrique (1) et étant traversé par l'au moins une ligne électrique et contenant à l'intérieur au moins le module de communication sans fil (2), le module de contrôle (7) et l'au moins un afficheur (6) monté dans le boîtier (8) de sorte que l'au moins une information visuelle affichée soit visible de l'extérieur du boîtier (8) et de préférence d'une face avant du boîtier (8),
- le module de contrôle (7) est relié électriquement au module de communication sans fil (2),
- le module de contrôle (7) et/ou l'au moins un afficheur (6) sont configurés pour être alimentés directement ou indirectement par une partie de l'énergie captée au moins en l'absence d'alimentation par le réseau électrique ou une source auxiliaire au moins lors d'une commande de la mise à jour et/ou d'une mise à jour de l'affichage de l'au moins une information visuelle affichée par au moins une information visuelle à jour, .
appareillage électrique **caractérisé en ce :**
- **que** le module de contrôle (7) est configuré pour commander la mise à jour de l'affichage de l'au moins une information visuelle affichée par l'au moins une information visuelle à jour en envoyant des données de mise à jour représentatives de l'information visuelle mise à jour puis un signal de pilotage (SP) à l'au moins un afficheur (6) si préalablement un lien de communication bidirectionnelle spécifique est établi et si au moins un signal de commande dédié de mise à jour (SC1) adressé spécifiquement au module de communication sans fil (2) en provenance de l'unité de communication distante (4) est réceptionné par le module de communication sans fil (2) puis transmis au module de contrôle (7) et pour être alimenté directement ou indirectement par une partie de l'énergie captée et en ce que l'au moins un afficheur (6) est configuré pour mettre à jour l'affichage de l'au moins une information visuelle affichée par l'au moins une information visuelle à jour après réception des données de mise à jour puis du signal de pilotage (SP) et pour être alimenté directement ou indirectement par une partie de l'énergie captée,
- **qu'**il comprend une unité de stockage de l'énergie électrique (10) configurée pour stocker une partie de l'énergie captée au moins en l'absence d'alimentation par le réseau électrique ou une source auxiliaire et pour alimenter indirectement le module de contrôle (7) et/ou l'au moins un afficheur (6),
- **que** l'unité de stockage de l'énergie électrique (10) est configurée pour stocker la partie de l'énergie captée au moins pendant la réception du signal de commande dédié de mise à jour (SC1) adressé spécifiquement au module de communication sans fil (2) de préférence au moins jusqu'à un premier seuil de charge permettant l'alimentation du module de contrôle (7) et de préférence jusqu'à un deuxième seuil de charge permettant l'alimentation de l'au moins un afficheur (6) et est configurée pour alimenter le module de contrôle (7) au moins pendant la réception du signal de commande dédié de mise à jour (SC1), l'envoi des données de mise à jour et l'envoi du signal de pilotage (SP),
- **que** le module de contrôle (7) est configuré pour être dans un mode veille ou basse consommation consécutivement à l'envoi des données, de sorte à limiter la consommation d'électricité provenant de l'unité de stockage de l'énergie électrique (10),
- **que** le module de contrôle (7) est configuré pour passer du mode veille ou basse consommation vers un mode réveillé après que le deuxième seuil de charge de l'unité de stockage de l'énergie électrique (10) soit atteint et préalablement à la transmission du signal de pilotage (SP) et est configuré pour être alimenté par l'unité de stockage de l'énergie électrique (10).

2. Appareillage électrique selon la revendication 1, **caractérisé en ce que** :
le module de contrôle (7) est configuré pour envoyer le signal de pilotage (SP) à l'au moins un afficheur (6) après réception du signal de commande dédié de mise à jour (SC1), puis après l'envoi des données de mise à jour, puis après que le deuxième seuil de charge de l'unité de stockage de l'énergie électrique (10) soit atteint et est configuré pour être alimenté par l'unité de stockage de l'énergie électrique (10),
l'au moins un afficheur (6) est configuré pour mettre à jour l'affichage de l'au moins une information visuelle affichée par l'au moins une information visuelle à jour après réception des données de mise à jour, puis après que le deuxième seuil de charge de l'unité de stockage de l'énergie électrique (10) soit atteint, puis après réception du signal de pilotage (SP) et est configuré pour être alimenté par l'unité de stockage de l'énergie électrique (10).

3. Appareillage électrique selon l'une quelconque des revendications 1 à 2, **caractérisé en ce que** le module de contrôle (7) est configuré pour transmettre un signal d'acquittement (SA) à l'unité de communication distante (4) via le module de communication sans fil (2) consécutivement à la mise à jour de l'au moins une information visuelle affichée par l'au moins une information visuelle à jour et pour être alimenté directement par une partie de l'énergie captée.

4. Appareillage électrique selon l'une quelconque des revendications 1 à 3, **caractérisé en ce que** l'unité de stockage de l'énergie électrique (10) comprend au moins une capacité.

5. Appareillage électrique selon l'une quelconque des revendications 1 à 4, **caractérisé en ce qu'**il consiste en un appareillage électrique (1) de protection et **en ce que** l'au moins un afficheur (6) est configuré pour afficher au moins une information visuelle représentative d'au moins un réglage de protection de préférence un calibre de protection de l'appareillage électrique (1) de protection de manière permanente.

6. Procédé de mise à jour de l'affichage de ladite information visuelle affichée par une information visuelle à jour d'au moins un afficheur (6) dans un appareillage électrique (1) de protection configuré pour communiquer avec l'unité de communication distante (4) comportant l'au moins un deuxième émetteur/ récepteur (5) configuré pour émettre le champ électromagnétique (EM) laquelle étant distincte et à distance de l'appareillage électrique (1), **caractérisé en ce que** l'appareillage électrique (1) est selon l'une quelconque des revendications 1 à 5 et ce que le procédé comprend :
- une étape d'émission du champ électromagnétique (100), lors de laquelle le deuxième émetteur/ récepteur (5) de l'unité de communication distante (4) émet le champ électromagnétique (EM) en champ proche et l'unité de communication distante (4) est approchée de l'appareillage électrique (1) préférentiellement à une distance inférieure à 5 centimètres,
- une étape de réception du champ électromagnétique (101), lors de laquelle le premier émetteur/ récepteur (3) du module de communication sans fil (2) de l'au moins un appareillage électrique (1) reçoit le champ électromagnétique (EM) en champ proche de sorte à établir le lien de communication bidirectionnelle spécifique par le champ électromagnétique (EM) et est alimenté électriquement par l'énergie captée à partir de l'intensité du champ électromagnétique du deuxième émetteur/récepteur (5),
- une étape de commande par le module de contrôle (104), lors de laquelle le module de contrôle (7) commande la mise à jour de l'au moins un afficheur (6) et est alimenté directement ou indirectement par une partie de l'énergie captée,
- une étape de mise à jour de l'au moins un afficheur (106), lors de laquelle l'au moins un afficheur (6) met à jour l'affichage de ladite information visuelle affichée par une information visuelle à jour et est alimenté directement ou indirectement par une partie de l'énergie captée.
- **en ce qu'**il comprend après l'étape de réception du champ électromagnétique (100), au moins :
- une étape d'émission d'une commande ciblée (102), lors de laquelle le deuxième émetteur/récepteur (5) de l'unité de communication distante (4) émet le champ électromagnétique (EM) pour transmettre le signal de commande dédié de mise à jour (SC1), puis
- une étape de réception de la commande ciblée (103), lors de laquelle le premier émetteur/récepteur (3) du module de communication sans fil (2) reçoit le signal de commande dédié de mise à jour (SC1) ; puis
- lors de l'étape de commande par le module de contrôle (104), le module de contrôle (7) reçoit le signal de commande dédié de mise à jour (SC1), puis envoie les données de mise à jour, puis envoie le signal de pilotage (SP) à l'au moins un afficheur (6) et est alimenté directement ou indirectement par une partie de l'énergie captée,
- lors de l'étape de mise à jour de l'au moins un afficheur (106), l'au moins un afficheur (6) reçoit les données de mise à jour puis le signal de pilotage (SP) puis met à jour l'affichage de ladite information visuelle affichée par une information visuelle à jour et est alimenté directement ou indirectement par une partie de l'énergie captée,
**en ce qu'**il comprend consécutivement à l'étape de réception du champ électromagnétique (101) au moins :
- une étape de stockage de l'énergie captée, lors de laquelle l'unité de stockage de l'énergie électrique (10) stocke une partie de l'énergie captée au moins en l'absence d'alimentation par le réseau électrique ou une source auxiliaire pour alimenter indirectement le module de contrôle (7) et/ou l'au moins un afficheur (6),
- lors de l'étape de stockage de l'énergie captée et lors de l'étape de commande par le module de contrôle (104), l'unité de stockage de l'énergie électrique (10) stocke la partie de l'énergie captée au moins pendant la réception du signal de commande dédié de mise à jour (SC1) adressé spécifiquement au module de communication sans fil (2) de préférence au moins jusqu'au premier seuil de charge permettant l'alimentation du module de contrôle (7) et de préférence jusqu'au deuxième seuil de charge permettant l'alimentation de l'au moins un afficheur (6), et le module de contrôle (7) est alimenté par l'unité de stockage de l'énergie électrique (10) au moins pendant la réception du signal de commande dédié de mise à jour (SC1), l'envoi des données de mise à jour puis l'envoi du signal de pilotage (SP) une étape de mise en veille (105) se déroulant pendant l'étape de commande par le module de contrôle (104), lors de laquelle le module de contrôle (7) est dans un mode veille ou basse consommation consécutivement à l'envoi des données de mise à jour, de sorte à limiter la consommation d'électricité provenant de l'unité de stockage de l'énergie électrique (10),
- une étape de réveil (105') se déroulant pendant l'étape de commande par le module de contrôle (104) après l'étape de mise en veille (105), le module de contrôle (7) passe du mode veille ou basse consommation vers le mode réveillé après que le deuxième seuil de charge de l'unité de stockage de l'énergie électrique (10) soit atteint et préalablement à la transmission du signal de pilotage (SP) et est alimenté par l'unité de stockage de l'énergie électrique (10).

7. Procédé de mise à jour de l'affichage selon la revendication 6, **caractérisé en ce que** :
- lors de l'étape de commande par le module de contrôle (104), le module de contrôle (7) reçoit le signal de commande dédié de mise à jour (SC1), puis envoie les données de mise à jour, puis le deuxième seuil de charge de l'unité de stockage de l'énergie électrique (10) est atteint, puis le module de contrôle (7) envoie le signal de pilotage (SP) à l'au moins un afficheur (6) et le module de contrôle (7) est alimenté par l'unité de stockage de l'énergie électrique (10),
- lors de l'étape de mise à jour de l'au moins un afficheur (106), l'au moins un afficheur (6) reçoit les données de mise à jour, puis le deuxième seuil de charge de l'unité de stockage de l'énergie électrique (10) est atteint, puis l'au moins un afficheur (6) reçoit le signal de pilotage (SP), puis l'au moins un afficheur (6) met à jour l'affichage de l'au moins une information visuelle affichée par l'au moins une information visuelle à jour et l'au moins un afficheur (6) est alimenté par l'unité de stockage de l'énergie électrique (10).

8. Procédé de mise à jour de l'affichage selon l'une quelconque des revendications 6 à 7, **caractérisé en ce qu'**il comprend en outre consécutivement à l'étape de mise à jour de l'au moins un afficheur (106) :
- une étape d'acquittement (107), lors de laquelle le module de contrôle (7) transmet le signal d'acquittement (SA) à l'unité de communication distante (4) via le module de communication sans fil (2) et est alimenté directement par une partie de l'énergie captée.
